# EUROPEAN PATENT SPECIFICATION

(11) **EP 3 228 966 B1**
(45) Date of publication and mention of the grant of the patent: **12.12.2018**
(21) Application number: 17169214.8
(22) Date of filing: 21.09.2016
(51) Int. Cl.: F25D 23/02

(54) **REFRIGERATOR**
KÜHLSCHRANK
RÉFRIGÉRATEUR

(30) Priority: 23.09.2015 KR 20150134690
(43) Date of publication of application: 11.10.2017
(62) Divisional of application: 16189832.5
(73) Proprietor: LG Electronics Inc., Seoul 07336 (KR)
(72) Inventor: JUNG, Jaehun, 08592 Seoul (KR)
(74) Representative: Ter Meer Steinmeister & Partner

(56) References cited:
- WO-A1-2015/015355
- WO-A1-2015/043479
- US-B2- 7 984 955

## Description

The present invention relates to a refrigerator more particularly, to a refrigerator including a door made of metal.

### Discussion of the Related Art

A refrigerator is an electric appliance configured to keep the food stuffs stored in one or more storage compartments by supplying cold air to the storage compartments. The storage compartments may usually include a refrigerator compartment for storing refrigerated food and a freezer compartment for storing frozen food.

Such a conventional refrigerator includes a cabinet having the storage compartments; one or more doors coupled to the cabinet to open and close the storage compartments; and a cooling system using a freezing cycle for supplying cold air to the storage compartments.

Recently, consumers tend to become interested in the electric appliances having metallic or metal-like appearance or design or texture. Such electric appliances having the metallic or metal-like appearance or design look luxurious or high-classy and hygienic and have simple designs.

To satisfy such demands, certain attempts are made to apply metallic appearance or texture to refrigerators. Especially, there is an attempt to apply the door having a metallic appearance or texture.

Moreover, certain attempts are made to use metal in the exterior appearance or design of the refrigerator.

However, if applying metal to the door of the refrigerator, it is difficult to provide even a handle made of metal in manufacturing processes.

A handle applied to a conventional refrigerator is manufactured by injection-moulding and can have a complicated structure. In contrast, it is quite difficult to realize and such a handle, using metal, and to process metal.

The door injection-molded by plastic to look like a metallic appearance or texture is plated or deposited with a door having a pocket type handle. In this instance, scratch is likely to occur on an exterior plated or deposited surface and such the door is not an actual metal door and it is limited to realize the actual metal exterior appearance or texture.

WO 2015/015355 A1 discloses a refrigerator door including an end cover and a door panel made of a metal sheet, where a top surface of the end cover includes an inclined surface portion that inclines downwards in a direction from the rear to the front, and the door panel includes a front panel. The door panel includes a front flange which is bent backwards from the front panel and is connected to the end cover and the front flange is located in parallel with and under the inclined surface portion.

US 7,984,955 B2 discloses a refrigerator door opening device and refrigerator having the same.

WO 2015/043479 A1 discloses a handle apparatus for a door body of a refrigerator.

### SUMMARY OF THE DISCLOSURE

The invention is defined in the independent claim 1. Further embodiments are defined in the dependent claims.

The pressing portion may be configured as a plurality of ribs.

The fixing member may include a support portion supporting an inner surface of the door panel.

The bending portion may include a third bending portion bending from a front surface of the door panel; a first bending portion inclined forward from a side surface of the door panel; and a second bending portion horizontally bending from a side surface of the door panel, and the cap panel may comprise a first cap panel supported by the third bending portion and the first bending portion; and a second cap panel supported by the second bending portion.

The recess may be longitudinally provided in a right and left direction.

To fix the cap panel and the fixing member to each other, the refrigerator may further comprise a fixing projection projected from a lower surface of the cap panel; and a fixing groove concavely formed in the fixing member and allowing the fixing projection to be insertedly fitted therein.

To fix the cap panel and the fixing member to each other, the refrigerator may further comprise a penetrating hole provided in the fixing member to expose the cap panel to an internal space of the door panel, wherein the cap panel exposed through the penetrating hole is bonded to blowing agent provided in the door panel to be fixed to the door panel.

The refrigerator may further comprise a fixing projection projected from a lower surface of the cap panel, wherein the fixing projection broadens a surface area of the cap panel bonded to the blowing agent provided in the door panel through the penetrating hole.

An adhesive or adhesive tape may be provided between the cap panel and the fixing member to fix the cap panel and the fixing member to each other.

The cap panel may be fabricated by die casting moulding.

The cap panel may be fabricated by press moulding. The refrigerator may further comprise a protecting portion extended from the fixing member and covering a cut surface of the cap panel.

The cap panel may be fabricated by extrusion moulding.

The refrigerator may further comprise a fixing rib convexly projected from a lower surface of the cap panel in a right-and-left direction; and a fixing groove concavely recessed on an upper surface of the fixing member in a right-and-left direction, wherein the fixing rib is insertedly fitted in the fixing groove.

The refrigerator of the present disclosure includes the door having the metal exterior appearance or texture. Accordingly, a user may be provided with luxuriousness or exclusivity.

Furthermore, the refrigerator includes the door made of metal and the pocket type handle provided in the metal door.

Still further, the refrigerator is capable of overcoming the assembling and processing difficulty by providing the door and the handle which are made of metal.

Still further, the refrigerator includes the door and the handle which are provided to compensate the disadvantage of the weak surface hardness possessed by the door and handle plated with metal after injection-molded by plastic.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1 is a perspective diagram illustrating a refrigerator according to exemplary embodiments of the present disclosure;
FIG. 2 is a front perspective diagram illustrating a door provided in a refrigerator according to one embodiment;
FIG. 3 is a rear perspective diagram illustrating a door provided in a refrigerator according to one embodiment;
FIG. 4 is a rear perspective diagram illustrating a door provided in a refrigerator according to one embodiment before a door inner case is coupled to the door;
FIG. 5 is an exploded perspective diagram illustrating a first embodiment of the door provided in the refrigerator;
FIG. 6 is a sectional diagram illustrating the first embodiment of the door provided in the refrigerator;
FIG. 7 is a diagram illustrating one example configured to secure a cap panel and a fixing member to each other;
FIG. 8 is an exploded perspective diagram illustrating a second embodiment of the door provided in the refrigerator;
FIG. 9 is a sectional diagram illustrating the second embodiment of the door provided in the refrigerator;
FIG. 10 is an exploded perspective diagram illustrating a third embodiment of the door provided in the refrigerator;
FIG. 11 (a) is an enlarged right view of the exploded perspective diagram illustrating the third embodiment of the door shown in FIG. 10;
FIG. 11 (b) is a diagram illustrating a state of the components coupled to each other shown in FIG. 11 (a);
FIG. 12 (a) is an enlarged left view of the exploded perspective diagram illustrating the third embodiment of the door shown in FIG. 10;
FIG. 12 (b) is a diagram illustrating a state of the components coupled to each other shown in FIG. 12 (a); and
FIG. 13 is a sectional diagram illustrating the third embodiment of the door provided in the refrigerator.

### DESCRIPTION OF SPECIFIC EMBODIMENTS

Description will now be given in detail according to exemplary embodiments disclosed herein, with reference to the accompanying drawings.

Use of such terminology herein is merely intended to facilitate description of the specification, and the terminology itself is not intended to give any special meaning or function. In the present disclosure, that which is well-known to one of ordinary skill in the relevant art has generally been omitted for the sake of brevity.

The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

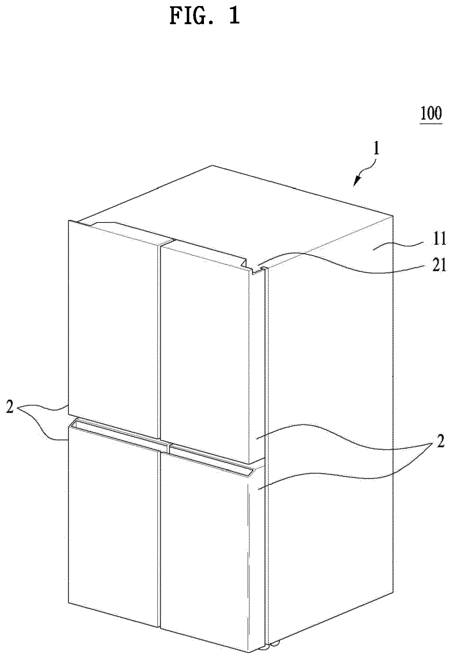

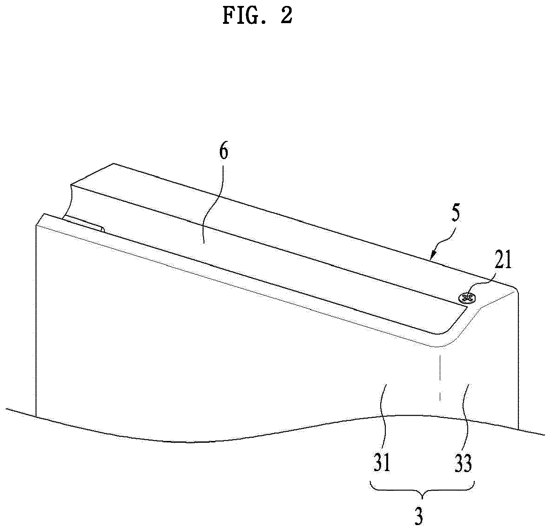

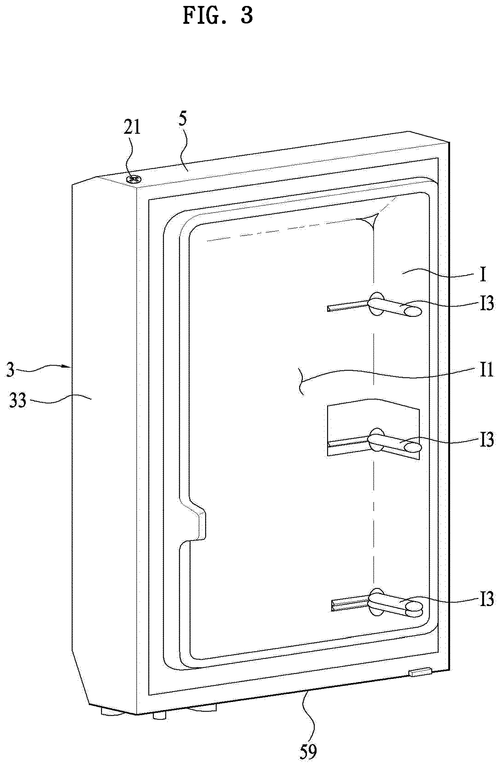

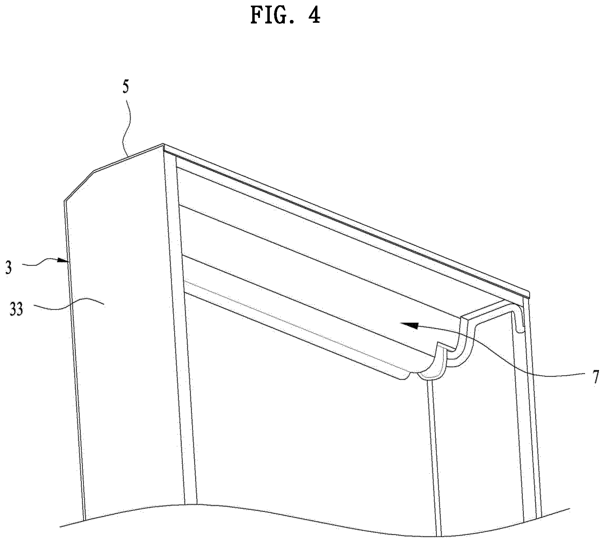

FIG. 1 is a perspective diagram illustrating a refrigerator according to exemplary embodiments of the present disclosure. FIG. 2 is a front perspective diagram illustrating a door provided in a refrigerator according to one embodiment. FIG. 3 is a rear perspective diagram illustrating a door provided in a refrigerator according to one embodiment. FIG. 4 is a rear perspective diagram illustrating a door provided in a refrigerator according to one embodiment before a door inner case is coupled to the door.

Hereafter, referring to FIG. 1, a refrigerator 100 according to the illustrated embodiment will be described in detail.

The refrigerator 100 according to the illustrated embodiment includes a cabinet 1 having a storage compartment (not shown); and a door 2 for opening and closing the storage compartment (not shown).

The cabinet 1 defines an exterior appearance of the refrigerator and the exterior appearance or profile of a conventional refrigerator is cube-shaped. However, the shape of the cabinet 1 provided in the refrigerator of the present disclosure is not limited thereto and it may be diversely determined.

The cabinet consists of an outer case 11 and an inner case (not shown). An insulating material is filled between the outer case 11 and the inner case (not shown) to prevent cold air inside the storage compartment from exchanging heat with external air.

The storage compartment (not shown) is provided in the cabinet 1 and it is the space defined by the inner case (not shown). The storage compartment (not shown) may include a freezer compartment (not shown) provided with the cold air to be kept at temperatures under zero and a refrigerator compartment (not shown) kept at preset temperatures lower than normal temperatures but above zero.

In the illustrated embodiments, the freezer compartment may be provided in a lower portion of the cabinet 1 and the refrigerator compartment may be provided in an upper portion of the cabinet 1, in other words, on a top of the freezer compartment.

The storage compartment (not shown) may communicate with the outside and the storage compartment (not shown) in communication with the outside may be open and closed by the door 2. The refrigerator and freezer compartments can be open and closed by the door 2.

The description about the door which will be made later is applicable to both of the refrigerator and freezer doors. For explanation sake, the description will be made about the door for opening and closing the freezer compartment.

Referring to FIG. 2, the door 2 is rotatably coupled to the cabinet 1. The door 2 includes a shaft 21 and the shaft 21 is connected by a hinge to rotatably couple the door 2 to one side of the cabinet 1.

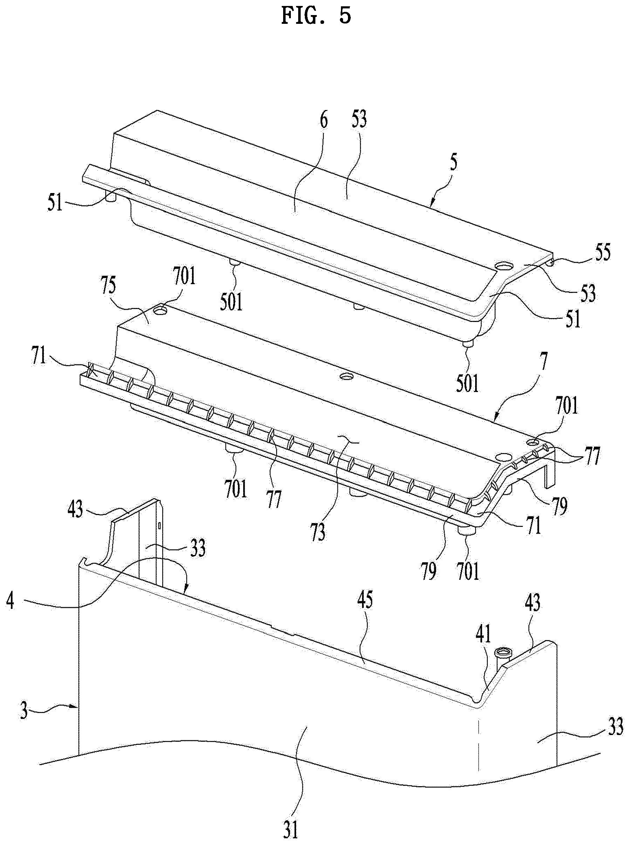

The door 2 may be made of metal and includes a door panel 3 forming a front surface 31 and a lateral surface 33 of the door 2; a bending portion 4 (see Figs. 5, 8 and 10) bending from the door panel 3; a cap panel 5 supported to one surface of the bending portion 4 and defining an upper and lower surface of the door 2; and a recess 6 provided in the cap panel 5 to function as a handle.

The door panel 3 may include a front door panel 31 defining a front surface of the door; and a side door panel 33 extended from the front door panel 31 and bending backward.

The side door panel 33 may be provided in each of two opposite sides of the front door panel 31.

A cross section of the door panel 3 may be ' 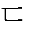 '-shape. In this instance, the door panel 3 may have an open top, bottom and back.

The door panel 3 may be fabricated by diverse methods and the door panel 3 provided in the door in accordance with the present disclosure may be fabricated as molding a metal plate made by the press-die which has a simple appearance and low manufacturing cost. However, the door panel may be fabricated by other die methods.

The cap panel 5 defines an upper surface or a lower surface of the door 2 and has an opening which is covered with the top or bottom of the door panel 3.

When the cap panel 5 is provided on the top of the door panel 3, a handle of the door may be provided on the top of the door.

When the cap panel 5 is provided on the bottom of the door panel 3, the handle of the door may be provided on the bottom of the door.

For explanation sake, the cap panel 5 provided on the top of the door panel 3 will be described. The following description is applicable to the case where the cap panel 5 is provided on the bottom of the door panel 3.

Referring to FIGS. 3 and 4, the refrigerator in accordance with the present disclosure may further include an auxiliary cap panel 59 defining the upper or lower surface of the door 2.

In case the cap panel 5 covers either of the top and bottom of the door panel 3, the auxiliary cap panel 59 may cover the other portion of the door panel the cap panel 5 does not cover.

The refrigerator in accordance with the present disclosure may further include a door inner case (I) provided in a rear surface of the door 2.

FIG. 4 illustrates the outer case having the door inner case (I) not insertedly fitted to. The outer case may be defined by the door panel, the cap panel and the auxiliary panel. Also, the outer case may be formed of metal.

The door inner case (I) includes a recessed portion I1 concavely recessed from the door 2; and a basket rest 13 provided in a lateral surface of the recessed portion I1 and resting a door basket (not shown).

The outer case is formed by arranging the cap panel 5 and the auxiliary panel 59 on the top and bottom of the door panel 3.

When the door inner case I is installed in the rear surface of the outer case, the space formed between the door panel 3 and the door inner case I may be filled with an insulating material such as polyurethane foam. Accordingly, the cold air inside the storage compartment (not shown) may not exchange heat with external air via the door 2.

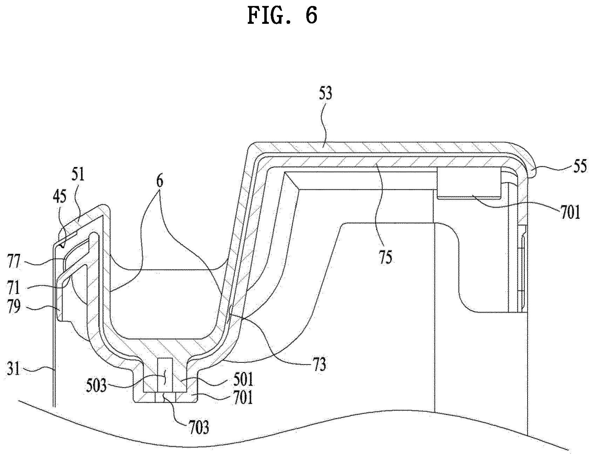

FIG. 5 is an exploded perspective diagram illustrating a first embodiment of the door provided in the refrigerator and FIG. 6 is a sectional diagram illustrating the first embodiment of the door provided in the refrigerator. Referring to FIGS. 5 and 6, the first embodiment of the door provided in the refrigerator in accordance with the present disclosure will be described.

The bending portion 4 may be bending from the door panel 3.

The bending portion 4 may be provided in the top or bottom of the door panel 3.

FIG. 5 illustrating the bending portion 4 provided in the top of the door panel 3.

The bending portion 4 may include a first bending portion 41 bending from an upper surface of the side door panel 33 and inclined forward; a second bending portion 43 connected with the first bending portion 41 in parallel.

The first bending portion 41 and the second bending portion 43 may be vertically bending from the side door panel 33.

The bending portion 4 may further include a third bending portion 45 bending from an upper surface of the front door panel 31.

The angle formed by the third bending portion and the front door panel 31 may be equal to the angle formed by the first bending portion 41 and the front door panel 31.

The third bending portion 45 provided in the upper surface of the front door panel 31 is connected with a lower portion of the first bending portion 41 inclinedly provided in the side door panel 33 and the second bending portion 43 is horizontally connected with the upper surface of the inclined first bending portion 41.

The cap panel 5 may be fixed to the top or bottom of the door panel 3 to define the upper or lower surface of the door.

The cap panel 5 may be supported to one surface (or an outer surface or an upper surface) of the bending portion 4.

The overall area of the cap panel 5 is smaller than an upper or lower opening of the door panel 3.

Also, while the overall area of the cap panel 5 is smaller than an upper or lower opening formed by the front door panel 31 and the two side door panels 33, the cap panel 5 may be supported by the bending portion 4 projected inward from the door panel 3.

The cap panel 5 may include a first cap panel 51 inclined forward; and a second cap panel 53 parallel with the first cap panel 51.

The inclined surface of the first cap panel 51 is arranged forward and the second cap panel 53 is horizontally bending in a state of being connected with upper end of the first cap panel 51.

The first cap panel 51 may be inclined forward at the same angle as the first bending portion 41 is inclined.

The first cap panel 51 may be provided in the upper surface of the first bending portion 41 and the upper surface of the third bending portion 45.

The second cap panel 53 may be provided in an upper surface of the second bending portion 43 and supported by the second bending portion 43.

The cap panel 5 may further include the third cap panel 55 inclined backward and connected to one end of the second cap panel 53.

The second cap panel 53 is supported by the second bending portion 43 and the first cap panel 51 is supported by the first and third bending portions 41 and 45. The third cap panel 55 is supported by the rear surface of the door panel 3. Then, the cap panel 5 arranged on the top of the door panel 3 can be fixed stably not to move forward and backward.

The recess 6 provided in the refrigerator in accordance with the present disclosure may be provided in the cap panel 5 and function as the handle when the user opens and closes the door 2.

The recess 6 may be concavely recessed from the cap panel 5 and especially in the first cap panel 51. The recess 6 may be recessed longitudinally in a right-and-left direction.

Also, the recess 6 has a groove as deep as a human finger and the groove has certain length in a right-and-left direction with respect to the door.

The recess 6 is open and the open area may be toward a center of two doors. The open area may be provided in the portion opposite to the shaft 21.

The refrigerator in accordance with the present disclosure may include a fixing member 7 fixed to the cap panel 5 and pressing the other surface of the bending portion 4.

One surface of the bending portion 4 is in contact with the cap panel 5 and the other surface of the bending portion 4 is in contact with the fixing member 7. The bending portion 4 is pressed between the cap panel 5 and the fixing member 7.

The fixing member 7 may be provided in an internal space of the door 2 (or the door panel 3).

It is preferred that the fixing member 7 is made of plastic and plastic is light and easy to realize in a complex structure. The fixing member 7 can be made by injection moulding.

The injection mold means the die method for fabricating a molded product made by injecting and chilling a polymer material an empty space formed between core and cavity, after pressing the molten or half molten polymer material at a high pressure.

It is also preferred that the polymer material used for the fixing member 7 is made of ABS resin.

An upper surface of the fixing member 7 may have a corresponding shape to an inner surface of the cap panel 5.

The fixing member 7 includes an inclined surface 71 corresponding to the first cap panel 51; a recess inserting portion 73 formed in a corresponding shape to the recess 6; and a flat surface 75 corresponding to a flat surface of the second cap panel 53.

The recess inserting portion 73 may be provided in the inclined surface 71 of the fixing member 7.

The recess inserting portion 73 may include a pressing portion 77 provided in a front or side area and a support portion 79 which will be described in detail later.

The flat surface 75 is located behind the recess inserting portion 73.

Also, the flat surface 75 may have a rectangular shape, viewed above, to support the door panel by contacting with an inner circumferential surface of the door panel 3. Accordingly, the fixing member 7 support the inner circumferential surface of the door panel 3 to make a cross section of the door panel have a rectangular shape.

The fixing member 7 may include a pressing portion 77 pressing the other surface (or the lower surface) of the bending portion 4 to fix the cap panel 5 supported by the upper surface of the bending portion 4 to the door panel 3.

The bending portion 4 may be pressed between the cap panel 5 and the pressing portion 77.

The cap panel 5 is located on the upper surface of the bending portion 4 and the pressing portion 77 presses the lower surface of the bending portion 4, only to fix the cap panel 5 to the door panel 3.

The pressing portion 77 may press the other surface of the bending portion 41, 43 and 45.

The pressing portion 77 may be projected from an edge of the fixing member 7 to press the other surface of the bending portion.

The pressing portion 77 is provided in the edge of the fixing member 7 and presses the other surface of the bending portion 41, 43 and 45 from the bottom.

A plurality of ribs as the pressing portion 77 may be provided to press the other surface of the bending portion, spaced a preset distance apart from each other.

The plurality of the ribs provided as the pressing portion 77 may reinforce the strength of the fixing member 7 and form an empty space between each two ribs, so that the weight of the fixing member 7 and the production cost can be reduced and saved.

Blowing agent is filled in the space formed between each two neighboring ribs and bond the fixing member 7 to the door panel 3.

The fixing member 7 may further include the support portion 79 supporting the inner surface of the door panel 3.

The support portion 79 is able to keep an external appearance as ' 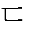 '-shape and prevent the fixing member 7 from shaking in the door panel 3.

The support portion 79 may be provided in a front or side end of the fixing member 7 to support an inner surface of the side door panel 33 as well as an inner surface of the front door panel 31.

The support portion 79 may be extended from the front or side end of the fixing member 7 downward and have a vertical cross section to surface-contact with the inner surface of the door panel 3.

The support portion 79 may be extended from the edge of the fixing member 7.

The support portion 79 may be extended from the pressing portion 77 downward.

Referring to FIG. 6, the refrigerator in accordance with the present disclosure may include a fixing projection 501 projected from a lower surface of the cap panel 5 to fix the cap panel 5 and the fixing member 7 to each other; and a fixing groove 701 concavely provided in the fixing member 7 to have the fixing projection 501 inserted therein.

The fixing projection 501 may be provided in the lower surface of the cap panel 5 where the recess 6 is formed. The fixing groove 701 may be provided in the recess inserting portion 73 of the fixing member 7 where the recess 6 is inserted.

The fixing projection 501 may further include a hollow 503 having a screw thread (not shown) formed in an inner circumferential surface; and a screw fastening hole 703 provided in the fixing groove 701 to make the hollow communicate with the internal space of the door panel 3.

When a worker insertedly puts and rotates a screw in the screw fastening hole 703, the screw is fastened to the screw thread of the hollow 503 provided in the fixing projection 501 and the cap panel 5 and the fixing member 7 are stably coupled to each other. In this instance, the bending portion 4 is fixedly disposed between the cap panel 5 and the fixing member 7.

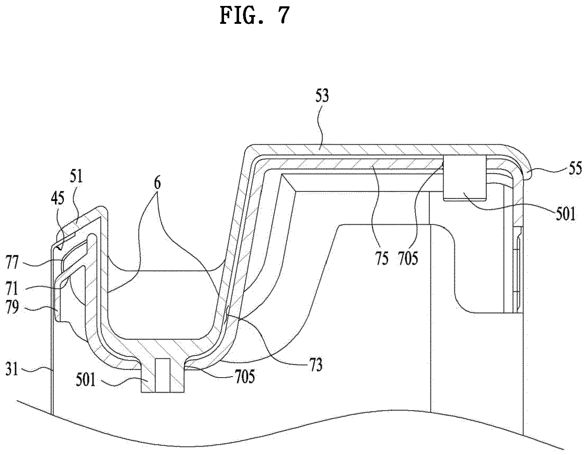

FIG. 7 is a diagram illustrating one example configured to secure a cap panel and a fixing member to each other.

Referring to FIG. 7, a penetrating hole 705 is further provided in the fixing member 7 to expose the cap panel 5 out to the internal space of the door panel 3 to as to fix the cap panel 5 and the fixing member 7 to each other.

When the blowing agent filled in the door panel 3 starts to blow, the cap panel 5 exposed through the penetrating hole 705 may be bonded to the blowing agent.

In case the blowing agent is blowing in the door panel 3, the fixing member is pressed upward by the blowing pressure and the fixing member presses the bending portion 4 upward. The cap panel 5 exposed through the penetrating hole 705 is bonded and fixed by the blowing agent.

A fixing projection 501 projected from the lower surface of the cap panel 5 may be further provided.

The fixing projection 501 may be exposed to the internal space of the door panel 3 through the penetrating hole 705. Accordingly, a surface area of the cap panel 5 bonded to the blowing agent may be broadened.

A screw thread (not shown) may be further provided in an outer circumferential surface of the fixing projection 501 as another example for fixing the cap panel 5 and the fixing member 7 to each other. The fixing projection 501 may be exposed to the internal space of the door panel 3 through the penetrating hole 705 and a fastening material such as a bolt (not shown) may be fastened to the outer circumferential surface of the fixing projection 501 so that the cap panel 5 and the fixing member 7 can be fixed to each other stably and that the bending portion 4 may be fixedly disposed between the cap panel 5 and the fixing member 7.

As another example for fixing the cap panel 5 and the fixing member 7 to each other, an adhesive or adhesive tape may be provided between the cap panel 5 and the fixing member 7 to fix the cap panel 5 and the fixing member 7 to each other.

Meanwhile, the cap panel 5 provided in the first embodiment of the door may be fabricated by die casting moulding.

The die casting moulding is the process for fabricating products by casting low-molten metal into a precise shaped mould at a high pressure. The die casting moulding is similar to injection moulding and proper to metal products. Examples of low-molten metal include Al, Zn, Mg or alloys of them.

The cap panel 5 provided in the first embodiment of the door provided in the refrigerator in accordance with the present disclosure may be fabricated with aluminum (Al) by die casting moulding. As shown in FIGS. 5 through 7, such the die casting moulding is proper to the complex shaped mould such as the cap panel 5 having the recess 6 with the closed side or the cap panel having the fixing projection 501 formed in the lower surface.

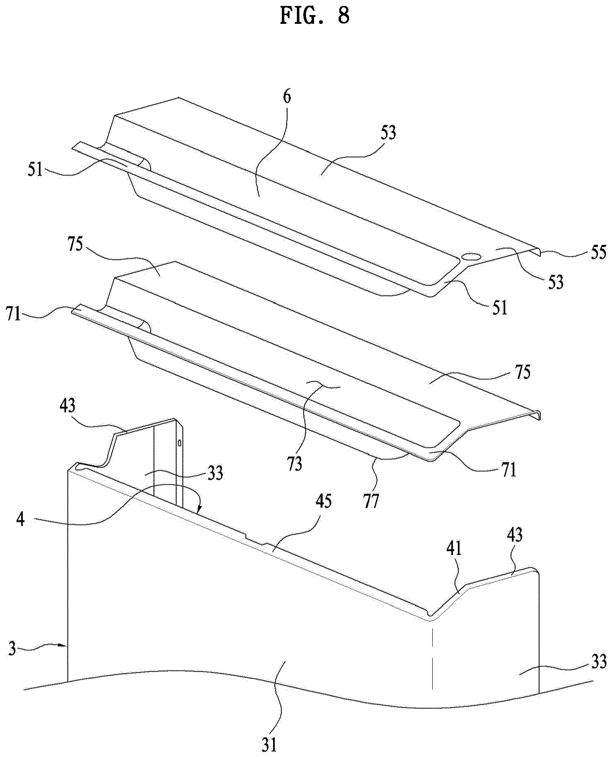

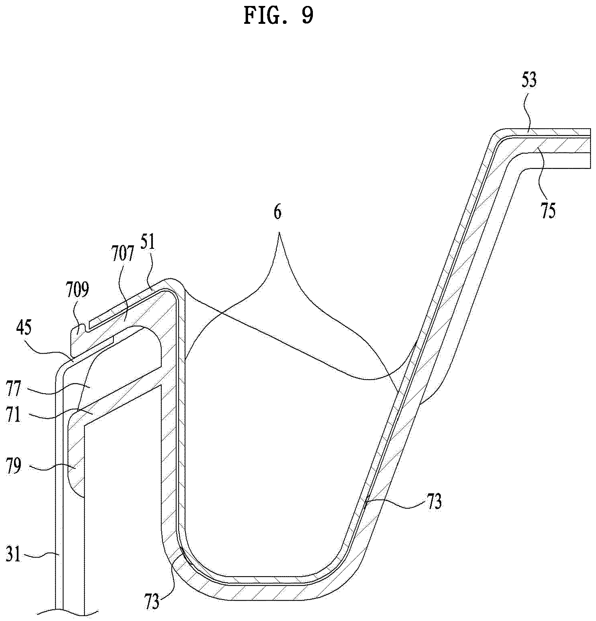

FIG. 8 is an exploded perspective diagram illustrating a second embodiment of the door provided in the refrigerator. FIG. 9 is a sectional diagram illustrating the second embodiment of the door provided in the refrigerator.

Hereinafter, referring to FIGS. 8 and 9, the second embodiment of the door provided in the refrigerator in accordance with the present disclosure will be described. The description about the first embodiment of the door mentioned above may be applied to the second embodiment of the door. The following description has priority over the conflicting parts of the two embodiments.

The second embodiment of the door may also include the cap panel 5.

The cap panel 5 provided in the second embodiment of the door may be fabricated by press die.

The press die means the moulding method for forming metal products by installing a die in a press machine configured to reciprocate linearly.

If the cap panel 5 is fabricated by press die, it is difficult to fabricate the structure having the complex shape or projection and a cut surface is disadvantageously sharp. In contrast, the production cost is low and the production time is short advantageously.

The cap panel 5 may be also supported by the bending portion 4 of the door panel 3 even in the second embodiment of the door provided in the refrigerator in accordance with the present disclosure.

The fixing member 7 (or the pressing portion 77) may press the bending portion 4 in the internal space of the door panel 3.

The bending portion 4 may be fixedly arranged between the cap panel 5 and the fixing member 7.

The fixing member 7 (or the support portion 79) may support the inner surface of the door panel 3.

To fix the cap panel 5 and the fixing member 7 to each other may be applied the method of bonding the cap panel 5 to the blowing agent exposed through the fixing member 7 by providing the penetrating hole 705 in the fixing member 7 and another method of providing the adhesives or adhesive tape between the cap panel 5 and the fixing member 7.

The illustrated second embodiment may include a protecting/ projecting portion 707 extended from the fixing member 7 and arranged between the cap panel 5 and the bending portion 4; and a stepped portion 709 stepped from one end of the projecting portion 707 and covering a cut surface of the cap panel 5.

The stepped portion 709 may be extended upward from the end of the projecting portion 707 and located on the same plane with the cap panel or higher than the thickness of the cap panel 5.

The stepped portion 709 may be provided as a groove for covering the end of the cap panel 5.

The projecting portion 707 and the stepped portion 709 prevent the user's hand from getting cut by the cut surface of the cap panel 5 when the user opens and closes.

For explanation sake, it is described that the projecting portion 707 is provided in the second embodiment of the door. However, the projecting portion 707 is applicable even to the first embodiment mentioned above or the third embodiment which will be described later.

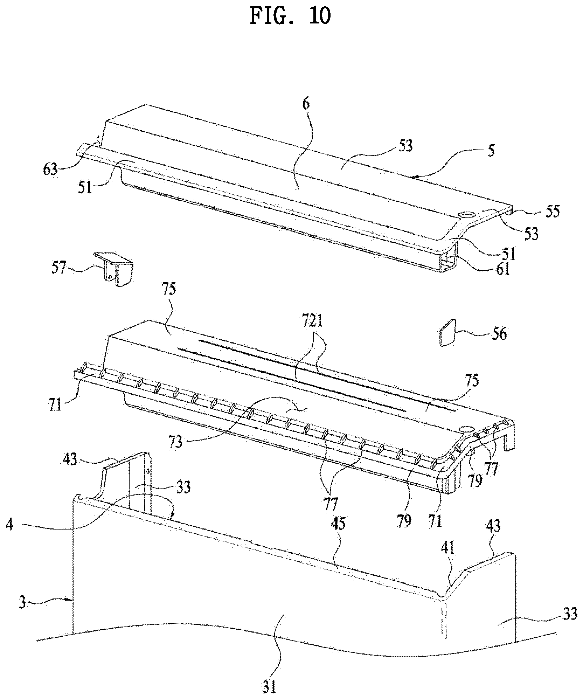

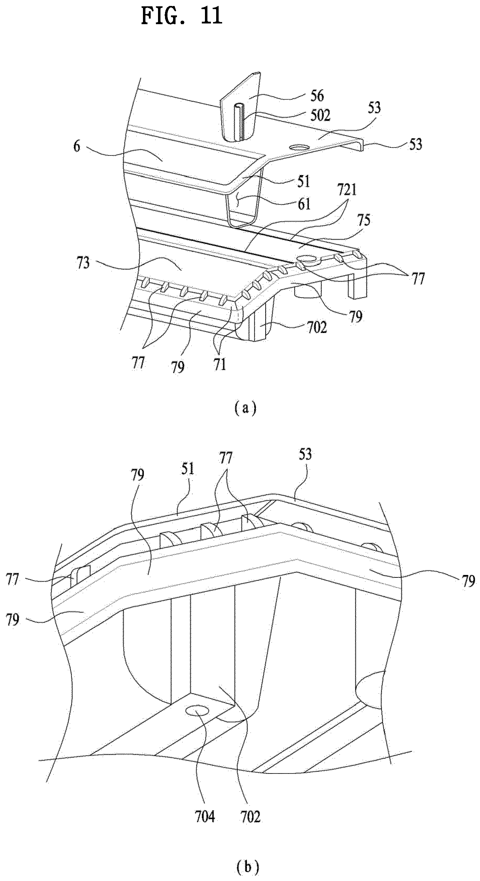

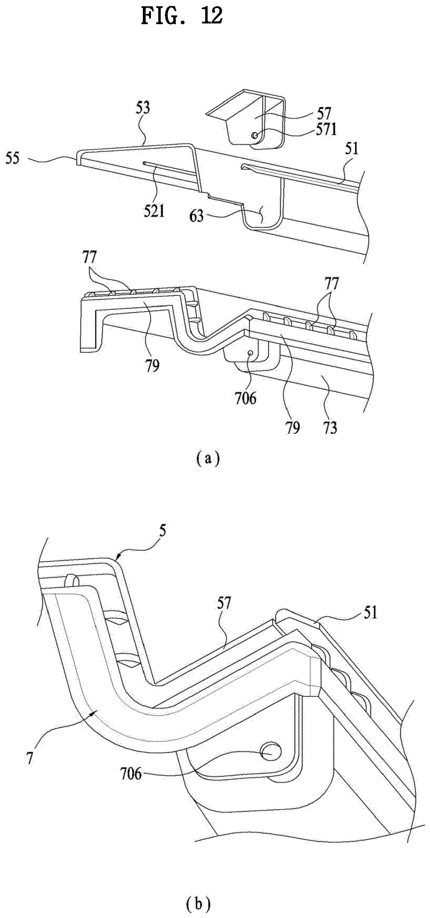

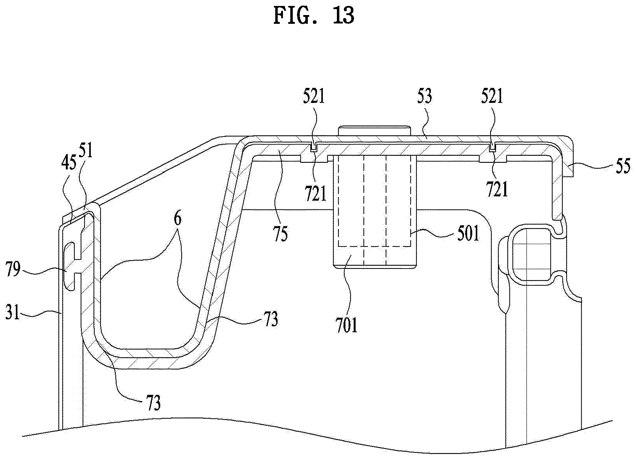

FIG. 10 is an exploded perspective diagram illustrating a third embodiment of the door provided in the refrigerator. FIG. 11 (a) is an enlarged right view of the exploded perspective diagram illustrating the third embodiment of the door shown in FIG. 10. FIG. 11 (b) is a diagram illustrating a state of the components coupled to each other shown in FIG. 11 (a). FIG. 12 (a) is an enlarged left view of the exploded perspective diagram illustrating the third embodiment of the door shown in FIG. 10. FIG. 12 (b) is a diagram illustrating a state of the components coupled to each other shown in FIG. 12 (a). FIG. 13 is a sectional diagram illustrating the third embodiment of the door provided in the refrigerator.

Referring to FIGS. 10 through 13, the third embodiment of the door provided in the refrigerator in accordance with the present disclosure will be described. The description about the first and second embodiments of the door mentioned above may be applied to the third embodiment of the door. The following description has priority over the conflicting parts of the embodiments.

As shown in FIG. 10, even the third embodiment of the door may include the cap panel 5.

The cap panel 5 provided in the second embodiment of the door may be fabricated by extrusion moulding.

The extrusion moulding means the method for continuously extruding products from a die, using a screw, after heated and molten metal is supplied to a cylinder. For example, the extrusion moulding is similar to the method of extruding a bar-like rice cake in Korea.

In case the cap panel 5 is fabricated by the extrusion moulding, it is difficult to form the complex shape such as the concave or convex shape or the projection or the complex structure such as the structure with the blocked side. However, it is possible to fabricate products continuously and the production time is short with the low production cost.

The cap panel 5 may be also supported by the bending portion 4 of the door panel 3 even in the third embodiment of the door provided in the refrigerator in accordance with the present disclosure.

The fixing member 7 (or the pressing portion 77) may press the bending portion 4 in the internal space of the door panel 3.

The bending portion 4 may be fixedly arranged between the cap panel 5 and the fixing member 7.

The fixing member 7 (or the support portion 79) may support the inner surface of the door panel 3 (see FIG. 13).

To fix the cap panel 5 and the fixing member 7 to each other may be applied the method of bonding the cap panel 5 to the blowing agent exposed through the fixing member 7 by providing the penetrating hole 705 in the fixing member 7 and another method of providing the adhesives or adhesive tape between the cap panel 5 and the fixing member 7.

As shown in FIG. 10, the cap panel 5 provided in the third embodiment may include the recess 6 functioning as the handle of the door.

The recess 6 may be concavely recessed from the first cap panel 51.

The top (the bottom in case the handle of the door is provided in the lower portion of the door) of the recess 6 may be open to allow the user's hand to insertedly put in.

A first opening 61 and a second opening 63 may be provided in right and left sides of the recess 6, respectively.

The third embodiment of the door is fabricated by the extrusion moulding and the cap panel 5 is fabricated only in a shape continuously formed in one direction.

Accordingly, the cross section of the cap panel in one direction is uniform.

In case the cap panel is formed by the extrusion moulding, the recess 6 cannot help including the first opening 61 and the second opening 63 formed in the right and left sides of the recess 6.

In this instance, the first opening 61 and the second opening 63 may be provided in case of using other metal moulding method and they are not formed only by the extrusion moulding.

As shown in FIG. 11, the third embodiment of the door may further include a fourth cap panel 56 for covering the first opening 61.

The fourth cap panel 56 may be formed in the same shape as the first opening 61 of the recess 6.

To fix the fourth cap panel 56 to the cap panel 5, the third embodiment may include an auxiliary fixing projection 502 provided in a side surface of the fourth cap panel 56; and an auxiliary fixing groove 702 provided in the recess inserting portion 73 of the fixing member 7 to insert the auxiliary fixing projection 502 therein.

When the cap panel 5 covers the top of the fixing member 7, the cap panel 5 including the recess 6 is inserted in the recess inserting portion 73.

The fourth cap panel 56 blocks the first opening 61 and the auxiliary fixing projection 502 of the fourth cap panel 56 is insertedly fitted in the auxiliary fixing groove 702 of the recess inserting portion 73.

A fastening material such as a bolt is fastened in the hollow provided in the auxiliary fixing projection 502, after penetrating the first auxiliary fastening hole 704 provided in the auxiliary fixing groove 702.

Accordingly, the first opening 61 is closed by the fourth cap panel 56.

Meanwhile, as shown in FIG. 12, the third embodiment may further include a fifth cap panel 57 for covering the second opening 63.

The fifth cap panel 57 may be formed in the same shape as the second opening 62 of the recess 6.

To fix the fifth cap panel 57 to the cap panel 5, the third embodiment may include a fifth cap panel fastening hole 571 provided in the fifth cap panel 57; and a second auxiliary fastening hole 706 provided in the fixing member 7.

When the cap panel covers the top of the fixing member, the cap panel including the recess 6 is insertedly fitted in the recess inserting portion 73.

The fifth cap panel 57 covers the second opening to block the second opening 63, the fifth cap panel fastening hole 571 is in communication with the internal space of the door panel 3 via the second auxiliary fastening hole 706.

In this instance, a screw material such as a bolt may be fastened in the fifth cap panel fastening hole 571 via the second auxiliary fastening hole 706.

Accordingly, the second opening 63 is closed by the fifth cap panel 57.

As shown in FIG. 13, the third embodiment may further include a fixing rib 521 projected from the lower surface of the cap panel 5 downward convexly and provided in a right-and-left direction; and a fixing groove 721 concavely recessed from the top of the fixing member 7 in the right-and-left direction.

When the cap panel 5 is fixed to the top of the fixing member 7 in contact, the fixing rib 521 may be insertedly fitted in the fixing groove 721 and the cap panel 5 may be prevented from moving on the top of the fixing member 7 in the right-and-left direction.

A plurality of fixing ribs 521 and a plurality of fixing grooves 721 may be spaced a preset distance apart from each other in a back-and-forth direction.

The fixing rib 521 and the fixing groove 721 are shown only in FIGS. 10 through 13 illustrating the third embodiment of the door. However, the present disclosure is not limited thereto and the fixing ribs 521 and the fixing grooves 721 may be applied to the first and second embodiments of the door.

## Claims

1. A refrigerator (100) comprises:
a cabinet (1) including a storage compartment provided therein; and
a door (2) opening and closing the storage compartment,
wherein the door (2) comprises:
a door panel (3) defining a front surface and a lateral surface of the door (2) and having a bending portion (4) bending from the door panel (3);
a cap panel (5) defining an upper and lower surface of the door (2) by being supported on one surface of the bending portion (4) and including a first cap panel (51) inclined forward, a second cap panel (53) parallel with the first cap panel (51), and a recess (6) provided in the first cap panel (51) to function as a handle; and
a fixing member (7) made of plastic and coupled to the cap panel (5) to press the other surface of the bending portion (4), wherein
the fixing member (7) includes an inclined surface (71) corresponding to the first cap panel (51), and a pressing portion (77) projected from an edge of the fixing member (7) to press the bending portion (4),
wherein an edge portion of the cap panel (5) covers the pressing portion (77), and
the bending portion (4) is inserted between the cap panel (5) and the pressing portion (77) of the fixing member (7), and the cap panel (5) is fixed to the door panel (3), **characterized in that** the fixing member (7) includes a recess inserting portion (73) formed in the inclined surface (71) in a corresponding shape to the recess (6), and a flat surface (75) corresponding to a flat surface of the second cap panel (53), and wherein the cap panel (5) is made of metal.

2. The refrigerator of claim 1, wherein the pressing portion (77) is configured as a plurality of ribs.

3. The refrigerator of claim 1 or 2, wherein the fixing member (7) includes a support portion (79) supporting an inner surface of the door panel (3).

4. The refrigerator of any one of the claims 1 to 3, wherein the bending portion (4) includes:
a third bending portion (45) bending from a front surface of the door panel (3);
a first bending portion (41) inclined forward from a side surface of the door panel (3); and
a second bending portion (43) horizontally bending from a side surface of the door panel (3), wherein
the first cap panel (51) is supported by the third bending portion (45) and the first bending portion (41); and
the second cap panel (53) is supported by the second bending portion (43).

5. The refrigerator of any one of the claims 1 to 4, wherein the recess (6) is longitudinally provided in a right and left direction.

6. The refrigerator of any one of the claims 1 to 5, further comprising to fix the cap panel (5) and the fixing member (7) to each other:
a fixing projection (501) projected from a lower surface of the cap panel (5); and
a fixing groove (701) concavely formed in the fixing member (7) and allowing the fixing projection (501) to be insertedly fitted therein.

7. The refrigerator of any one of the claims 1 to 5, further comprising to fix the cap panel (5) and the fixing member (7) to each other:
a penetrating hole (705) provided in the fixing member (7) to expose the cap panel (5) to an internal space of the door panel (3),
wherein the cap panel (5) exposed through the penetrating hole (705) is bonded to a blowing agent provided in the door panel (3) to be fixed to the door panel (3).

8. The refrigerator of claim 7, further comprising:
a fixing projection (501) projected from a lower surface of the cap panel (5),
wherein the fixing projection (501) broadens a surface area of the cap panel (5) bonded to the blowing agent provided in the door panel (3) through the penetrating hole (705).

9. The refrigerator of any one of the claims 1 to 5, wherein an adhesive or adhesive tape is provided between the cap panel (5) and the fixing member (7) to fix the cap panel (5) and the fixing member (7) to each other.

10. The refrigerator of any one of the claims 1 to 9, wherein the cap panel (5) is fabricated by die casting moulding, press moulding or extrusion moulding.

11. The refrigerator of claim 10, further comprising:
a projecting portion (707) extended from the fixing member (7) and covering a cut surface of the cap panel (5).

12. The refrigerator of any one of the claims 1 to 5, further comprising:
a fixing rib (521) convexly projected from a lower surface of the cap panel (5) in a right-and-left direction; and
a fixing groove (721) concavely recessed on an upper surface of the fixing member (7) in a right-and-left direction,
wherein the fixing rib (521) is insertedly fitted in the fixing groove (721).

## Patentansprüche

1. Kühleinrichtung (100), die Folgendes enthält:
einen Schrank (1), der ein in ihm vorgesehenes Aufbewahrungsfach enthält; und
eine Tür (2), die das Aufbewahrungsfach öffnet und verschließt, wobei
die Tür (2) Folgendes enthält:
ein Türblatt (3), das eine vordere Oberfläche und eine Seitenfläche der Tür (2) definiert und einen Biegeabschnitt (4) besitzt, der sich vom Türblatt (3) ausgehend biegt;
eine Kappenplatte (5), die eine obere und eine untere Oberfläche der Tür (2) definiert, indem sie an einer Oberfläche des Biegeabschnitts (4) getragen wird, und die eine erste Kappenplatte (51), die vorwärts geneigt ist, eine zweite Kappenplatte (53), die parallel zur ersten Kappenplatte (51) ist, und eine Vertiefung (6), die in der ersten Kappenplatte (51) vorgesehen ist, um als Griff zu funktionieren, enthält; und
ein Befestigungselement (7), das aus Plastik hergestellt ist und an die Kappenplatte (5) gekoppelt ist, um die andere Oberfläche des Biegeabschnitts (4) zusammenzudrücken, wobei
das Befestigungselement (7) eine geneigte Oberfläche (71), die der ersten Kappenplatte (51) entspricht, und einen Pressabschnitt (77), der von einer Kante des Befestigungselements (7) vorsteht, um den Biegeabschnitt (4) zusammenzudrücken, enthält, wobei
ein Kantenabschnitt der Kappenplatte (5) den Pressabschnitt (77) abdeckt und
der Biegeabschnitt (4) zwischen der Kappenplatte (5) und dem Pressabschnitt (77) des Befestigungselements (7) eingesetzt ist und die Kappenplatte (5) am Türblatt (3) befestigt ist,
**dadurch gekennzeichnet, dass** das Befestigungselement (7) einen Vertiefungseinsetzabschnitt (73), der in der geneigten Oberfläche (71) in einer der Vertiefung (6) entsprechenden Form gebildet ist, und eine ebene Fläche (75), die einer ebenen Fläche der zweiten Kappenplatte (53) entspricht, enthält, wobei die Kappenplatte (5) aus Metall hergestellt ist.

2. Kühleinrichtung nach Anspruch 1, wobei der Pressabschnitt (77) in Form mehrerer Stege konfiguriert ist.

3. Kühleinrichtung nach Anspruch 1 oder 2, wobei das Befestigungselement (7) einen Tragabschnitt (79), der eine Innenfläche des Türblattes (3) trägt, enthält.

4. Kühleinrichtung nach einem der Ansprüche 1 bis 3, wobei der Biegeabschnitt (4) Folgendes enthält:
einen dritten Biegeabschnitt (45), der sich von einer vorderen Oberfläche des Türblattes (3) ausgehend biegt;
einen ersten Biegeabschnitt (41), der von einer Seitenfläche des Türblattes (3) nach vorne geneigt ist; und
einen zweiten Biegeabschnitt (43), der sich von einer Seitenfläche des Türblattes (3) ausgehend horizontal biegt, wobei
die erste Kappenplatte (51) durch den dritten Biegeabschnitt (45) und den ersten Biegeabschnitt (41) getragen wird; und
die zweite Kappenplatte (53) durch den zweiten Biegeabschnitt (43) getragen wird.

5. Kühleinrichtung nach einem der Ansprüche 1 bis 4, wobei die Vertiefung (6) der Länge nach in einer Rechts-/Linksrichtung vorgesehen ist.

6. Kühleinrichtung nach einem der Ansprüche 1 bis 5, die ferner, um die Kappenplatte (5) und das Befestigungselement (7) aneinander zu befestigen, Folgendes enthält:
einen Befestigungsvorsprung (501), der von einer Unterseite der Kappenplatte (5) vorsteht; und
eine Befestigungsnut (701), die im Befestigungselement (7) konkav gebildet ist und es dem Befestigungsvorsprung (501) erlaubt, in ihr eingesetzt montiert zu sein.

7. Kühleinrichtung nach einem der Ansprüche 1 bis 5, die ferner, um die Kappenplatte (5) und das Befestigungselement (7) aneinander zu befestigen, Folgendes enthält:
ein Durchgangsloch (705), das im Befestigungselement (7) vorgesehen ist, um die Kappenplatte (5) zu einem Innenraum des Türblattes (3) freizulegen, wobei
die Kappenplatte (5), die durch das Durchgangsloch (705) freigelegt ist, mit einem Treibmittel, das im Türblatt (3) vorgesehen ist, verbunden ist, um am Türblatt (3) befestigt zu sein.

8. Kühleinrichtung nach Anspruch 7, die ferner Folgendes enthält:
ein Befestigungsvorsprung (501), der von einer Unterseite der Kappenplatte (5) vorsteht, wobei
der Befestigungsvorsprung (501) einen Oberflächenbereich der Kappenplatte (5), die mit dem Treibmittel, das im Türblatt (3) vorgesehen ist, durch das Durchgangsloch (705) verbunden ist, erweitert.

9. Kühleinrichtung nach einem der Ansprüche 1 bis 5, wobei ein Klebstoff oder ein Klebeband zwischen der Kappenplatte (5) und dem Befestigungselement (7) vorgesehen ist, um die Kappenplatte (5) und das Befestigungselement (7) aneinander zu befestigen.

10. Kühleinrichtung nach einem der Ansprüche 1 bis 9, wobei die Kappenplatte (5) durch Druckgussformen, Pressformen oder Extrusionsformen hergestellt ist.

11. Kühleinrichtung nach Anspruch 10, die ferner Folgendes enthält:
einen vorstehenden Abschnitt (707), der sich vom Befestigungselement (7) erstreckt und eine Schnittfläche der Kappenplatte (5) abdeckt.

12. Kühleinrichtung nach einem der Ansprüche 1 bis 5, die ferner Folgendes enthält:
einen Befestigungssteg (521), der von einer Unterseite der Kappenplatte (5) in einer Rechts-/Linksrichtung konvex vorsteht; und
eine Befestigungsnut (721), die an einer Oberseite des Befestigungselements (7) in einer Rechts-/Linksrichtung konkav versenkt ist, wobei
der Befestigungssteg (521) in der Befestigungsnut (721) eingesetzt montiert ist.

## Revendications

1. Réfrigérateur (100) comprenant :
une carrosserie (1) incluant un compartiment de stockage prévu à l'intérieur ; et
une porte (2) qui ouvre et qui ferme le compartiment de stockage,
dans lequel la porte (2) comprend :
un panneau de porte (3) définissant une surface avant et une surface latérale de la porte (2) et ayant une portion repliée (4) repliée depuis le panneau de porte (3) ;
un panneau de coiffe (5) définissant une surface supérieure et une surface inférieure de la porte (2) en étant supporté sur une surface de la portion repliée (4) et incluant un premier panneau de coiffe (51) inclinée vers l'avant, second panneau de coiffe (53) parallèle au premier panneau de coiffe (51), et un creux (6) prévu dans le premier panneau de coiffe (51) pour faire office de poignée ; et
un élément de fixation (7) réalisé en matière plastique et couplé au panneau de coiffe (5) pour presser l'autre surface de la portion repliée (4),
dans lequel
l'élément de fixation (7) inclut une surface inclinée (71) correspondant au premier panneau de coiffe (51),
et une portion de pressage (77) qui se projette depuis un bord de l'élément de fixation (7) pour presser la portion repliée (4),
dans lequel une portion de rebord du panneau de coiffe (5) couvre la portion de pressage (77), et
la portion repliée (4) est insérée entre le panneau de coiffe (5) et la portion de pressage (77) de l'élément de fixation (7), et le panneau de coiffe (5) est fixé sur le panneau de porte (3),
**caractérisé en ce que** l'élément de fixation (7) inclut une portion d'insertion de creux (73) formée dans la surface inclinée (71) dans une forme correspondant au creux (6), et une surface plane (75) correspondant à une surface plane du second panneau de coiffe (53), et dans lequel le panneau de coiffe (5) est réalisé en métal.

2. Réfrigérateur selon la revendication 1, dans lequel la portion de pressage (77) est configurée sous forme d'une pluralité de nervures.

3. Réfrigérateur selon la revendication 1 ou 2, dans lequel l'élément de fixation (7) inclut une portion de support (79) qui supporte une surface intérieure du panneau de porte (3).

4. Réfrigérateur selon l'une quelconque des revendications 1 à 3, dans lequel la portion repliée (4) inclut :
une troisième portion repliée (45) repliée depuis une surface avant du panneau de porte (3) ;
une première portion repliée (41) inclinée vers l'avant depuis une surface latérale du panneau de porte (3) ; et
une seconde portion repliée (43) repliée horizontalement depuis une surface latérale du panneau de porte (3), dans lequel
le premier panneau de coiffe (51) est supporté par la troisième portion repliée (45) et par la première portion repliée (41) ; et
le second panneau de coiffe (53) est supporté par la seconde portion repliée (43).

5. Réfrigérateur selon l'une quelconque des revendications 1 à 4, dans lequel le creux (6) est prévu longitudinalement dans la direction vers la droite et vers la gauche.

6. Réfrigérateur selon l'une quelconque des revendications 1 à 5, comprenant en outre, afin de fixer le panneau de coiffe (5) et l'élément de fixation (7) l'un à l'autre ;
une projection de fixation (501) qui se projette depuis une surface intérieure du panneau de coiffe (5) ; et
une gorge de fixation (701) formée de manière concave dans l'élément de fixation (7) et permettant d'y engager par insertion la projection de fixation (501).

7. Réfrigérateur selon l'une quelconque des revendications 1 à 5, comprenant en outre, afin de fixer le panneau de coiffe (65) et l'élément de fixation (7) l'un à l'autre :
un trou de pénétration (705) prévu dans l'élément de fixation (7) pour exposer le panneau de coiffe (5) vers un espace interne du panneau de porte (3), dans lequel le panneau de coiffe (5) exposé à travers le trou de pénétration (705) est relié à un agent de soufflage prévu dans le panneau de porte (3) pour être fixé au panneau de porte (3).

8. Réfrigérateur selon la revendication 7, comprenant en outre :
une projection de fixation (501) qui se projette depuis une surface inférieure du panneau de coiffe (5),
dans lequel la projection de fixation (501) élargit une superficie du panneau de coiffe (5) relié à l'agent de soufflage prévu dans le panneau de porte (3) à travers le trou de pénétration (705).

9. Réfrigérateur selon l'une quelconque des revendications 1 à 5, dans lequel un adhésif ou un ruban adhésif est prévu entre le panneau de coiffe (5) et l'élément de fixation (7) pour fixer le panneau de coiffe (5) et l'élément de fixation (7) l'un à l'autre.

10. Réfrigérateur selon l'une quelconque des revendications 1 à 9, dans lequel le panneau de coiffe (5) est fabriqué par coulée en moule, moulage à la presse ou moulage par extrusion.

11. Réfrigérateur selon la revendication 10, comprenant en outre :
une portion en projection (707) s'étendant depuis l'élément de fixation (7) et couvrant une surface découpée du panneau de coiffe (5).

12. Réfrigérateur selon l'une quelconque des revendications 1 à 5, comprenant en outre :
une nervure de fixation (521) qui se projette de manière convexe depuis une surface inférieure du panneau de coiffe (5) dans une direction droite/gauche ; et
une gorge de fixation (721) évidée de manière concave sur une surface supérieure de l'élément de fixation (7) dans une direction droite/gauche,
dans lequel la nervure de fixation (521) est engagée par insertion dans la gorge de fixation (721).
